Europäisches Patentamt

European Patent Office

Office européen des brevets

(11) Publication number: **0 067 886**

**B1**

(12) **EUROPEAN PATENT SPECIFICATION**

(45) Date of publication of patent specification: **02.04.86**

(51) Int. Cl.⁴: **H 02 P 5/34**

(21) Application number: **82900136.1**

(22) Date of filing: **23.12.81**

(86) International application number:
**PCT/JP81/00404**

(87) International publication number:
**WO 82/02461 22.07.82 Gazette 82/18**

(54) INDUCTION MOTOR DRIVE SYSTEM.

(30) Priority: **30.12.80 JP 186753/80**

(43) Date of publication of application:
**29.12.82 Bulletin 82/52**

(45) Publication of the grant of the patent:
**02.04.86 Bulletin 86/14**

(84) Designated Contracting States:
**CH DE FR GB LI**

(56) References cited:
**EP-A-0 010 981**
**EP-A-0 030 462**
**JP-A-53 013 127**
**JP-A-55 063 593**
**JP-A-55 074 377**
**JP-U-49 135 708**

**ELEKTRIE, vol. 32, no. 9, 1978, BERLIN (DD), P.**
**ECKLEBE: "Ein vereinfachtes Verfahren zur**
**feldorientierten Regelung der**
**Asynchronmaschinen mit Kurzschlussläufer",**
**pages 465-466**

(73) Proprietor: **FANUC LTD**
**3580, Shibokusa Aza-Komanba Oshino-mura**
**Minamitsuru-gun Yamanashi 401-05 (JP)**

(72) Inventor: **KOBARI, Katsuo**
**6-17-35-210, Fujimi-cho Tachikawa-shi**
**Tokyo 190 (JP)**
Inventor: **ISHIDA, Hiroshi**
**2-2-73, Matsubara-cho Hamura-machi**
**Nishitama-gun Tokyo 190-11 (JP)**

(74) Representative: **Billington, Lawrence Emlyn**
**et al**
**HASELTINE LAKE & CO Hazlitt House 28**
**Southampton Buildings Chancery Lane**
**London WC2A 1AT (GB)**

Courier Press, Leamington Spa, England.

# Description

The present invention relates to an induction motor driving system.

Drive control, of an induction motor, where direct current is changed into alternating current by an inverter circuit and wherein the induction motor is driven with the alternating current, is known as variable-frequency control (VF control) or variable-voltage variable-frequency control (VVVF control).

VF control is a method in which primary frequency, which is the output of the inverter circuit, is varied in accordance with a command speed, while VVVF control is control in which the amplitude of the primary voltage is also varied in proportion to the variation of the primary frequency, so as to control an output torque to be a constant magnitude.

The conventional control systems as stated above deal with voltage and current to be applied to the induction motor, on the basis of amplitude and frequency. Since they are control systems with a mean value operation, they are incapable of fine control having quick-response. In order to ameliorate this drawback, there has recently been developed and put into practical use a so-called "vector control system" which employs a pulse width control system and which controls the instantaneous value of the stator current of an induction motor, whereby the generation of a torque truly equivalent to that of a shunt D.C. machine can be effected. That is, the vector control system of the induction motor is based on the torque generating principle of the shunt D.C. machine and controls the instantaneous value of the stator current to perform torque generation equivalent to that of the shunt D.C. machine. Such a vector control system is disclosed in "Elektrie", vol. 32, No. 9, 1978, pages 465—466.

In this manner, vector control makes instantaneous value control possible. However, as the rotational speed of the induction motor becomes high, the frequency of the primary current command becomes high. When using a transistor inverter, the high primary frequency eventually approximates to the chopping frequency of the transistors constituting the inverter, and the wave-form of the primary input voltage approximates to a rectangular wave, so that the current loop gain of the system declines. With a low current loop gain of the system, the current as commanded fails to flow through the induction motor.

According to the present invention there is provided an induction motor driving system comprising a speed detector for detecting the rotational speed of an induction motor, speed command means for producing a command speed, an error amplifier for amplifying the difference between the actual rotational speed of the induction motor and the command speed, and a controllable inverter for supplying induction currents to the motor, the motor driving system being adapted and arranged such that said inverter will be controlled in dependence upon said difference between the actual and command motor speeds by so-called "vector control" in which motor primary current is varied and motor exciting current is held constant in dependence upon a constant value of exciting current command, the driving system being characterised by means for detecting when the actual motor speed exceeds a predetermined base speed, and for increasing the exciting current command value in accordance with the actual motor speed when it exceeds said predetermined base speed.

The aforesaid disadvantage is thus alleviated, by the vector control being changed to so-called slip control, with a predetermined speed serving as the boundary between the two control modes.

In this slip control, when the driving supply voltage of the induction motor is substantially constant no problem occurs but, when it rises above a predetermined level, problems such as the generation of heat take place. It is therefore desirable to hold the driving supply voltage substantially constant. It is, however, also desirable for manufacturers to manufacture the same driving devices for domestic market needs and for foreign needs. Unfortunately, in such cases the driving supply voltages can differ widely. For example, the driving supply voltage is $200 \text{ V} \pm 10\%$ in Japan and is $230 \text{ V} \pm 10\%$ in the U.S., so that it fluctuates from 180 V to 250 V. In other words, a supply voltage of $230 \text{ V} \pm 10\%$ may be applied to a driving device designed for $200 \text{ V} \pm 10\%$. In slip control, accordingly, the induction motor may be overexcited (exciting current may be too large) and may generate heat, with the resultant possible hazard of breakdown. Therefore quick-response of control of the induction motor, and safety of the equipment, are not always compatible aims. The solution to this problem will be disclosed later.

An embodiment of an induction motor driving system according to the present invention provides a quick-response in which current as commanded can be caused to flow through an induction motor even when the rotational speed has become high when controlling the induction motor by vector control. In the present invention, this is accomplished by increasing the exciting current command value in accordance with the rotational speed of the induction motor when this rotational speed has exceeded a predetermined value. This means that vector control is shifted to so-called slip control at the predetermined speed. When adopting such a control system as stated before, no problem is posed when the driving supply voltage of the induction motor is substantially constant, but problems including the generation of heat are encountered when the driving supply voltage has risen above a predetermined level.

It is possible to adapt the inventive system so that there are no problems such as the generation of heat even when the driving supply voltage fluctuates. To accomplish this, the level of the driving supply voltage of the induction motor is detected and the predetermined speed, serving as a threshold value for changing the exciting current command value, is raised in accordance with the detected level.

Thus, there can be provided as a preferred embodiment of the invention an induction motor driving system which has good response and which does not pose such problems as the excessive generation of heat.

For a better understanding of the present invention and to show how it may be put into effect reference will now be made, by way of example, to the accompanying drawings in which:

Figure 1 shows diagrams for explaining the operation of a D.C. Motor;

Figure 2 is a vector diagram of a two-phase induction motor;

Figure 3 shows waveform diagrams of stator currents of the two-phase induction motor;

Figure 4 shows an equivalent circuit of an induction motor;

Figure 5 is a block diagram of a vector controller;

Figure 6 is a circuit diagram of a two-phase to three-phase converter circuit;

Figure 7 is a circuit diagram of a pulse width control type inverter;

Figure 8 is an operating waveform diagram of the inverter;

Figure 9 is a diagram of a rotational speed-exciting command characteristic;

Figure 10 is a block diagram producing the characteristic of Figure 9;

Figure 11 is a circuit diagram of an exciting current amplitude controller;

Figure 12 shows diagrams of waveforms in parts of the controller;

Figure 13 is a block diagram of another embodiment of the present invention;

Figure 14 is a circuit diagram of an exciting current amplitude controller; and

Figure 15 shows diagrams of waveforms in parts of the controller.

For a better understanding of the present invention, embodiments of the invention will be described in connection with the accompanying drawings with reference to the principle of vector control of an induction motor on which the present invention is founded, and also to a previously proposed vector control system for an induction motor which applies such principle and which forms the basis of the illustrated embodiments of the present invention.

First, vector control will be described.

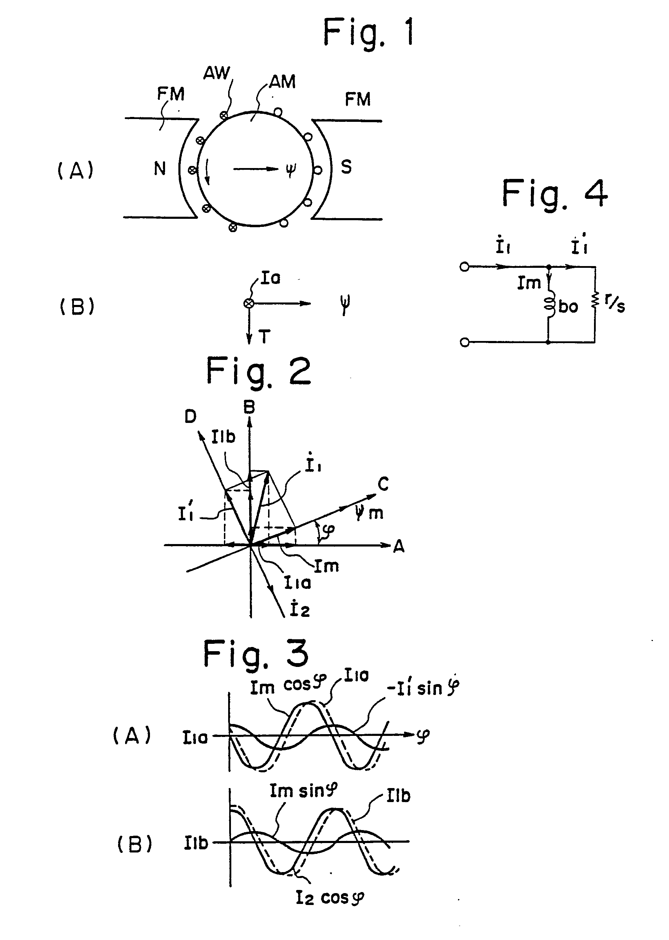

In general, the torque generating method of a shunt D.C. machine is to commutate currents by means of a commutator so that an armature current $I_a$ may always intersect a main magnetic flux $\varphi$ orthogonally, as shown in Figure 1(A) and 1(B). A generated torque T is indicated by the following equation, and it is proportional to the armature current $I_a$ when the main magnetic flux $\varphi$ is constant:

$$T = KI_a\varphi \qquad (1)$$

In Figure 1(A), FM denotes a field pole, AM an armature, and AW an armature winding.

When the above relationship is applied to an induction motor, $\varphi$ can be caused to correspond to the magnetic flux vector $\dot{\varphi}_2$ of a rotor and $I_a$ to the secondary current vector $I_2$ thereof. Accordingly, in order to drive the induction motor equivalently to the shunt D.C. machine as regards the torque generation, the relation between the magnetic flux vector $\dot{\varphi}_2$ and secondary current vector $I_2$ of the rotor may be controlled as shown in Figure 1(B), in other words, in a manner to intersect orthogonally, at all times. In this way, the vector control ensures the orthogonal relation between the magnetic flux vector $\dot{\varphi}_2$ and the current vector $I_2$. When the secondary leakage inductance is neglected, a generated torque T is expressed by the following equation:

$$T = K\dot{I}_2 \times \dot{\varphi}_2 = KI_2\varphi_2 \fallingdotseq KI_2\varphi_m \qquad (2)$$

(where $\varphi_m$ denotes a main magnetic flux which is produced by an exciting current $I_m$).

Next, there will be explained a method of driving a two-phase induction motor on the basis of vector control. Figure 2 is a vector diagram of the two-phase induction motor, in which C—D axes form a coordinate system coincident with the phase of the main magnetic flux $\varphi_m$, and A—B axes the fixed coordinate system of a stator. $I_1$ denotes a stator current (primary current), $I_m$ an exciting current component and $I_1'$ a primary load current component, and $I_{1a}$ and $I_{1b}$ denote the A-axial and B-axial components of the stator current $I_1$ as the A-phase stator current and B-phase stator current.

Assuming now that the main magnetic flux $\dot{\varphi}_m$ is rotating at a rotating angle $\varphi$ (letting an angular velocity be $\omega$, $\varphi = \omega t$) with respect to the fixed system of the stator, the A-phase stator current $I_{1a}$ and B-phase stator current $I_{1b}$ are expressed by the following equations and become as shown in Figures 3(A) and (B), respectively:

$$I_{1a} = I_m\cos\varphi - I_1'\sin\varphi \qquad (3)$$

$$I_{1b} = I_m\sin\varphi + I_1'\cos\varphi \qquad (4)$$

The primary load current $I_1'$ and the secondary current $I_2$ differ in phase by 180° from each other, and have the following relation in magnitude:

$$I_2 = KI_1' \qquad (5)$$

Here, K denotes the turn ratio between the primary side and the secondary side, which depends upon the ratio of the numbers of phases.

In vector control, the A-phase and B-phase stator currents $I_{1a}$ and $I_{1b}$ indicated in Equations (3) and (4) are produced and are conducted through stator windings (primary windings) to drive the induction motor. In such vector control system, when a load has increased or decreased, only the primary load current $I_1'$ (secondary current) is responsively increased or decreased, whereas the exciting current $I_m$ is held constant. Figure 4 shows an equivalent circuit of the induction motor, and the reason why only the primary load current $I_1'$ is varied in accordance with the change of the load will be explained with reference to this figure. In the figure, $b_0$ indicates an excitation susceptance, $r$ an equivalent resistance, and $s$ a slip. When the load of the induction motor has increased, the slip $s$ increases,

$$\frac{r}{s}$$

decreases and the primary load current $I_1$, (secondary current $I_2$) increases in accordance with the load, but the exciting current $I_m$ remains constant. In vector control, therefore, only the primary load current $I_1$, is varied when the load has increased or decreased.

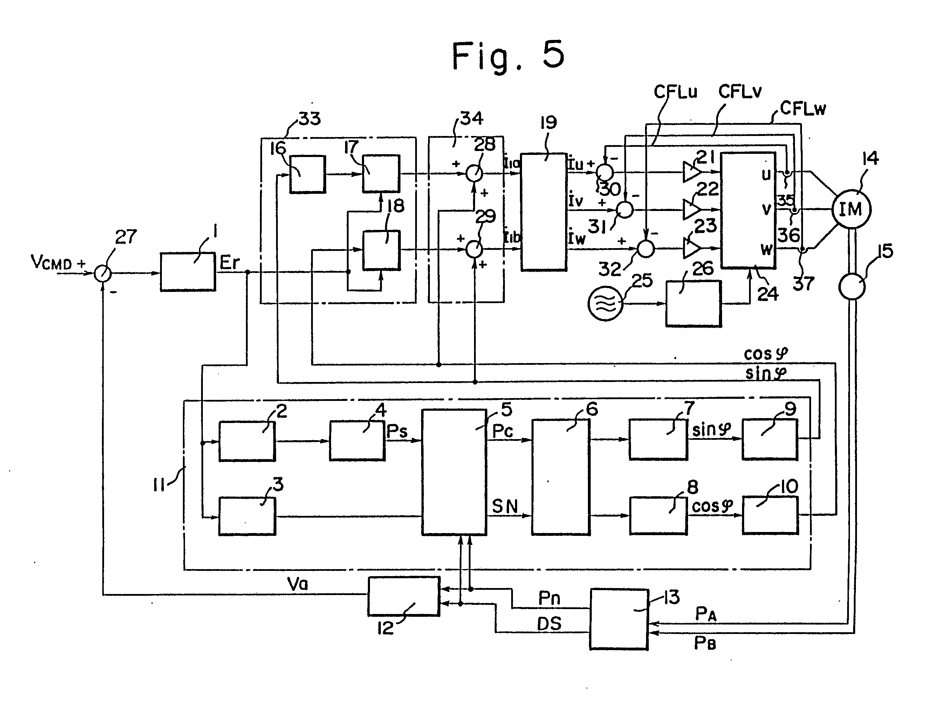

Figure 5 is a block diagram of a vector controller. Numeral 1 designates a proportional integrating type error amplifier, numeral 2 an absolute value circuit which converts the output of the error amplifier 1 into an absolute value, numeral 3 a direction discriminator circuit, and numeral 4 a voltage-to-frequency converter (VF converter) which provides pulses $P_s$ having a frequency proportional to the level of an analog signal delivered by the absolute-value circuit 2 (the frequency being equal to four-times the slip frequency). Numeral 5 designates a combining circuit, which combines the output pulses $P_s$ of the VF converter 4 and pulses $P_n$ having a frequency proportional to the rotational speed of an induction motor and which delivers a train of combined pulses $P_c$ and sign signals SN of the respective pulses. Numeral 6 indicates an up-down counter, which counts up or counts down the pulses $P_c$ in accordance with the sign signals SN. Shown at numerals 7 and 8 are function generators which receive the count values of the up-down counter 6 and which provide a sine wave (digital value) $\sin\varphi$ and a cosine wave (digital value) $\cos\varphi$ in accordance with the count values.

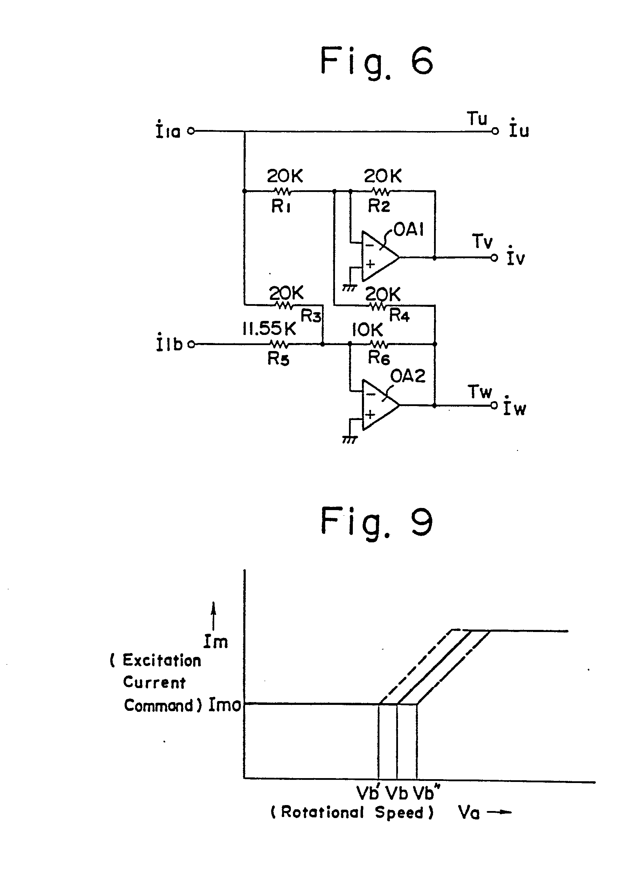

Numerals 9 and 10 indicate DA converters which convert the received digital values of the sine and cosine waves into analog values. A two-phase sine-wave generator circuit 11 is constructed of the circuits extending from the absolute-value circuit 2 to the DA converter 10. Numeral 12 indicates a frequency-to-voltage converter (hereinbelow, abbreviated to "F—V converter"). Numeral 13 indicates a quadrupling circuit by which rotation signals $P_A$ and $P_B$ of the A-phase and B-phase having a phase difference of 90° and delivered by a pulse generator 15 directly connected to the rotary shaft of the induction motor 14 are converted into pulses $P_n$ having a frequency four-times that of the rotation signals. The circuit 13 also discriminates the phases of the rotation signals $P_A$ and $P_B$ so as to transmit a direction discrimination signal DS. Numeral 16 indicates an inverter circuit, numerals 17 and 18 indicate multiplier circuits, and numeral 19 indicates a two-phase to three-phase changer circuit which changes two-phase signals into three-phase signals and which has a circuit arrangement as shown in Figure 6. The two-phase to three-phase changer circuit has two operational amplifiers $OA_1$ and $OA_2$, resistors $R_1$—$R_4$ of 20 k$\Omega$, a resistor $R_5$ of 11.55 k$\Omega$ and a resistor $R_6$ of 10 k$\Omega$. When the resistances of the respective resistors $R_1$—$R_6$ are determined as mentioned above and the components are connected as shown in the figure, the following signals are respectively provided from terminals $T_u$, $T_v$ and $T_w$:

$$\dot{i}_u = \dot{i}_{1a}$$

$$\dot{i}_v = -\frac{1}{2}\dot{i}_{1a} + \frac{\sqrt{3}}{2}\dot{i}_{1b}$$

$$\dot{i}_\omega = -\frac{1}{2}\dot{i}_{1a} - \frac{\sqrt{3}}{2}\dot{i}_{1b}$$

These signals $\dot{i}_u$, $\dot{i}_v$ and $\dot{i}_w$ are three-phase currents which are displaced in phase by $2\pi/3$ from one another.

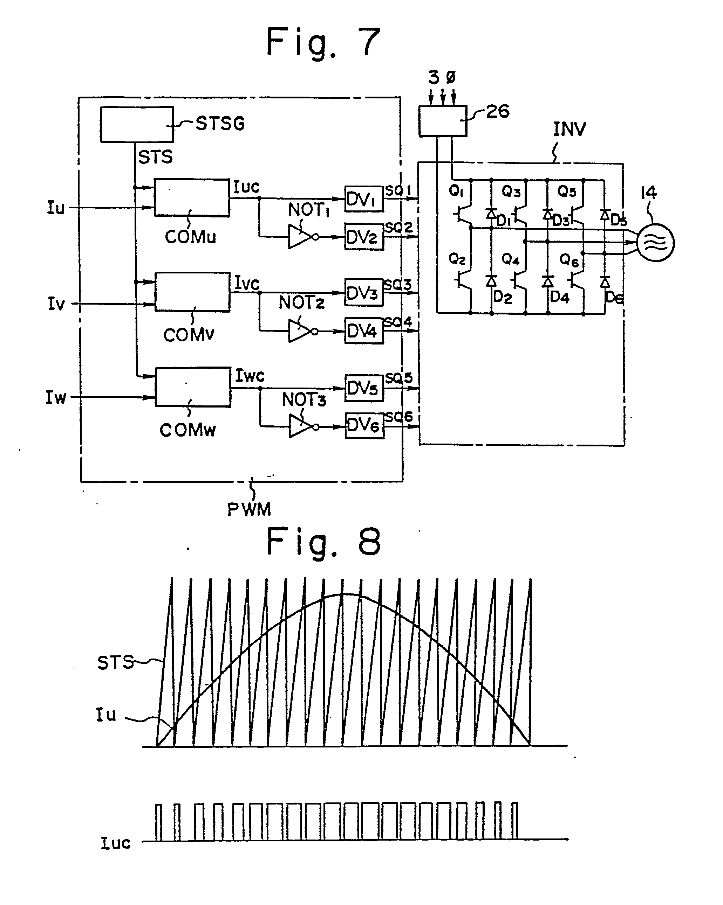

Numerals 21—23 denote current amplifier circuits, numeral 24 a pulse width controlling inverter, numeral 25 a three-phase A.C. power source, and numeral 26 a rectifier circuit which rectifies three-phase alternating currents into direct current. The pulse width controlling inverter 24 has a pulse width modulator circuit PWM and an inverter INV as shown in Figure 7. The pulse width modulator circuit PWM has a saw-tooth wave generator circuit STSG for generating a saw-tooth wave signal STS, comparators $COM_u$, $COM_v$ and $COM_w$, NOT gates $NOT_1$—$NOT_3$ and drivers $DV_1$—$DV_6$, while the inverter INV has six transistors $Q_1$—$Q_6$ and diodes $D_1$—$D_6$. The comparators $COM_u$, $COM_v$ and $COM_w$ compare the amplitudes of the saw-tooth wave signal STS and the three-phase A.C. signals $I_u$, $I_v$ and $I_w$, and they provide logical "1" when $I_u$, $I_v$ and $I_w$ are greater than the value of STS and logical "0" when smaller, respectively. Thus, for $I_u$, a pulse-width-modulated current command $I_{uc}$ shown in Figure 8 is provided by the comparator $COM_u$. That is, three-phase current commands $I_{uc}$, $I_{vc}$ and $I_{wc}$ pulse-width-modulated in accordance with the amplitudes of $I_u$, $I_v$ and $I_w$ are provided. Subsequently, the NOT gates $NOT_1$—$NOT_3$ and the driver circuits $DV_1$—$DV_6$ convert these current commands $I_{uc}$, $I_{vc}$ and $I_{wc}$ into drive signals $SQ_1$—$SQ_6$, which on-off control the corresponding power transistors $Q_1$—$Q_6$ constituting the inverter INV.

Numerals 27—32 denote adder or subtractor circuits, symbols $CFL_u$, $CFL_v$ and $CFL_w$ current feedback loops, and numerals 35—37 current transformers for detecting the primary currents of the U-, V- and W-phases.

The inverter circuit 16 and the multiplier units 17 and 18 constitute a primary load current calculating circuit, and the adder or subtractor circuits 28 and 29 constitute a primary current calculating circuit.

Now, the operation of the above circuit will be described.

In order to rotate the motor at a desired rotational speed, a speed command signal $V_{CMD}$ having a predetermined analog value is applied by a speed command circuit, not shown, to the input end of the adder or subtractor circuit 27. It is assumed that the induction motor 14 is rotating under a predetermined load at a rotational speed which is lower than the command speed by a slip S. The rotational speed of the induction motor 14 is detected by the pulse generator 15 which functions as a speed detector, and by which the two pulse trains (rotation signals) $P_A$ and $P_B$ that have a frequency proportional to the rotational speed and phases shifting $\pi/2$ from each other are generated. Both the pulse trains $P_A$ and $P_B$ are applied to the quadrupling circuit 13, and are converted into the pulse train $P_n$ having the quadruple frequency. Subsequently, the pulse train $P_n$ is analogized by the F—V converter 12, and the resulting speed signal $V_a$ is applied to the adder or subtractor circuit 27. The difference signal $E_r$ between the speed command signal and the aforementioned speed signal is applied to the absolute value circuit 2 and the direction discriminator circuit 3 through the error amplifier 1. The error amplifier 1 executes proportional-plus-integral calculations indicated by the following equations:

$$E_r = K_1(V_{CMD} - V_a) + K_2\Sigma(V_{CMD} - V_a) \quad (6)$$

$$\Sigma(V_{CMD} - V_a) = \Sigma(V_{CMD} - V) + (V_{CMD} - V) \quad (7)$$

The absolute-value circuit 2 converts the output of the error amplifier 1 into an absolute value, while the direction discriminator circuit 3 discriminates the sign of the voltage delivered from the error amplifier 1 and provides logical "1" for the plus sign and logical "0" for the minus sign. The signal delivered from the absolute-value circuit 2 indicates the slip S, in other words, the state of the load imposed on the induction motor 14, and the signal voltage becomes large for an increase in the load and small for decrease in the load. The VF converter 4 provides the pulses $P_s$ of the frequency proportional to the voltage delivered from the absolute-value circuit 2. The frequency of the pulses $P_s$ is quadruple the slip frequency.

The combining circuit 5 combines the output pulses $P_s$ of the VF converter 4 and the pulses $P_n$ from the quadrupling circuit 13, and provides the combined pulses. The up-down counter 6 counts up or counts down the output pulses $P_c$ of the combining circuit in accordance with the signs SN thereof. The count values of the up-down counter 6 are subsequently applied to the function generators 7 and 8, and converted into the digital sine wave signal $\sin\varphi$ and cosine wave signal $\cos\varphi$ by these function generators. Here, $\varphi$ is equal to $(\omega_s + \omega_n)t$ in which $\omega_s$ denotes the slip angular frequency and $\omega_n$ the rotating angular frequency of the motor 14. That is, the maximum values of the digital sine wave $\sin\varphi$ and cosine wave $\cos\varphi$ are constant, and only the frequencies thereof change. Next, the digital sine and cosine waves $\sin\varphi$ and $\cos\varphi$ are respectively applied to the DA converters 9 and 10, in which they are converted into analog sine and cosine waves $\sin\varphi$ and $\cos\varphi$. Referring to Figure 2, both the sine and cosine wave voltages $\sin\varphi$ and $\cos\varphi$ are the A- and B-phase components of the exciting current, the amplitudes of which are constant irrespective of the increase or decrease of the load imposed on the motor 14. The analog sine and cosine wave signals $\sin\varphi$ and $\cos\varphi$ delivered from the DA converters 9 and 10 and the output $E_r$ of the error amplifier 1 are multiplied in the primary load current calculating circuit 33 to create primary load current components $(-I_1' \cdot \sin\varphi)$ and $(I_1' \cdot \cos\varphi)$ for the two phases with peak values varying in accordance with the change of the load. In the primary current calculating circuit 34 composed of the adder and subtractor circuits 28 and 29, the exciting current components $\cos\varphi$ and $\sin\varphi$ are respectively added to the primary load current components for the two phases, to create the stator current $I_{1a} = \cos\varphi - I_1' \cdot \sin\varphi$ of the A-phase and the stator current $I_{1b} = \sin\varphi + I_1' \cdot \cos\varphi$ of the B-phase having a phase lag of 90° from the former. Thereafter, using the stator currents $I_{1a}$ and $I_{1b}$ for the two phases, the three-phase A.C. signals $I_u$, $I_v$ and $I_w$ are generated in the two-phase to three-phase changer circuit 19 and are applied to the comparators $COM_u$, $COM_v$ and $COM_w$ (Figure 7). The respective comparators $COM_u$, $COM_v$ and $COM_w$ compare the amplitudes of the saw-tooth wave signal STS and the three-phase current commands $I_u$, $I_v$ and $I_w$ and provide the pulse-width-modulated current commands $I_{uc}$, $I_{vc}$ and $I_{wc}$ of the three phases, which are passed through the NOT gates $NOT_1$—$NOT_3$ and the drivers $DV_1$—$DV_6$ so as to provide the inverter driving signals $SQ_1$—$SQ_6$. These inverter driving signals $SQ_1$—$SQ_6$ are respectively applied to the bases of the power transistors $Q_1$—$Q_6$ constituting the inverter INV, and they on-off control the corresponding power transistors $Q_1$—$Q_6$ so as to supply three-phase induction currents to the three-phase induction motor 14. Thenceforth similar controls are performed until the motor 14 finally rotates at the command speed. In this manner, the vector control permits instantaneous value control. However, when the rotational speed of the induction motor becomes high, the frequency of the primary current command becomes high. The high primary frequency approximates to the chopping frequency of the transistors constituting the inverter, and the waveform of the primary input voltage approximates to a rectangular wave, so that the current loop gain of the system lowers. As a result, the current as commanded fails to flow through the induction motor.

In order to compensate for such fault, the present invention has improved this fundamental technology by adding a new technique thereto.

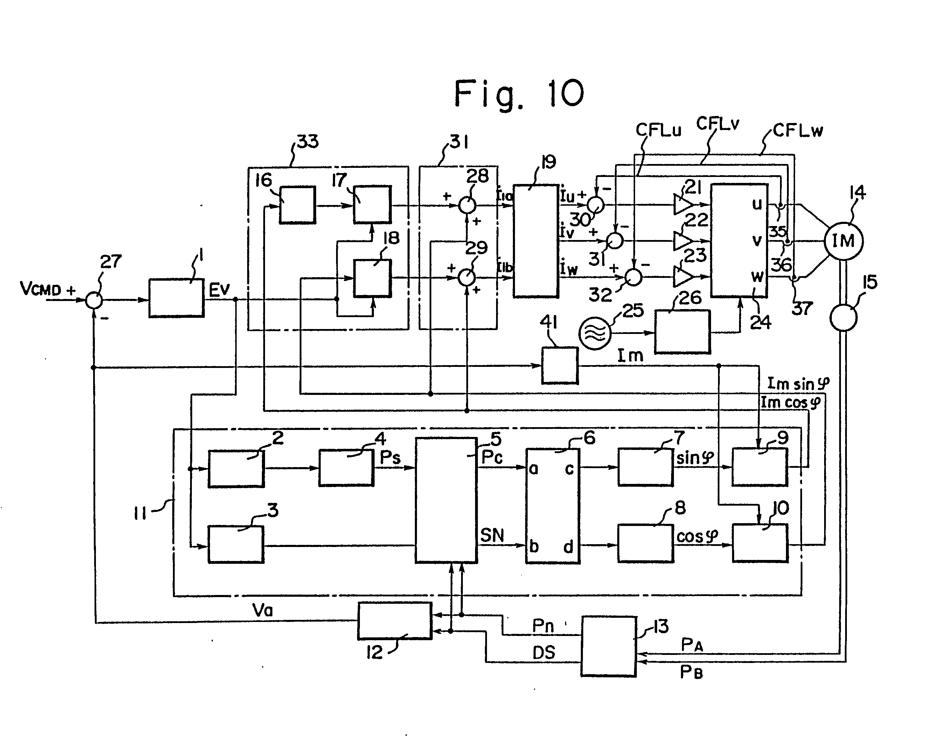

Figure 9 is a diagram of rotational speed-exciting current command characteristics, and Figure 10 is a block diagram of an embodiment of the invention having the characteristics of Figure 9.

As apparent from a solid line in Figure 9, the exciting current command value $I_m$ is held at a constant value ($=I_{mo}$) until a base speed $V_b$, e.g. 1500 rpm, is reached. Thereafter $I_m$ is increased in accordance with the rotational speed $V_a$ at above $V_b$.

The difference between the embodiment of the present invention in Figure 10 and the fundamental technology in Figure 5, is that in Figure 10 an exciting current amplitude-controlling circuit 41 is disposed so as to receive the rotational speed $V_a$ at the input terminal thereof and to deliver the amplitude signal $I_m$ shown in Figure 9 from the output terminal thereof. As a result, $I_m$ sinφ and $I_m$ cosφ are respectively provided from the DA converters 9 and 10, and the exciting current command value is increased in accordance with values of the rotational speed $V_a$ at above the base speed $V_b$.

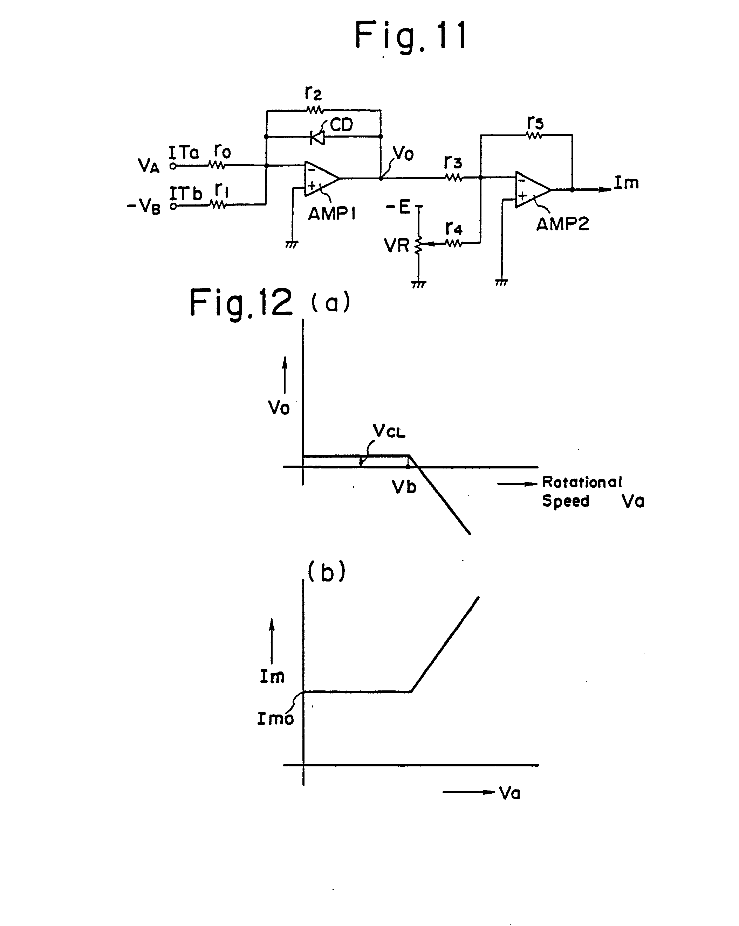

Figure 11 is a detailed diagram of the exciting current amplitude-controlling circuit 41, and Figure 12 shows waveforms in parts of the circuit. In Figure 11, $r_o$—$r_5$ denotes resistors, CD a clamping diode, VR a variable resistor, and $AMP_1$—$AMP_2$ amplifiers. An input terminal $IT_a$ is supplied with an actual speed voltage $V_A$ corresponding to the rotational speed $V_a$, while an input terminal $IT_b$ is supplied with a negative voltage ($-V_B$) corresponding to the base speed $V_b$.

When the rotational speed $V_a$ is not higher than the base speed $V_b(V_A-V_B \leqq 0)$, the output voltage $V_o$ of the amplifier $AMP_1$ becomes a clamp voltage value $V_{CL}$ dependent upon the clamping diode CD, and when the rotational speed $V_a$ is higher than the base speed $V_b(V_A-V_B>0)$, the output voltage $V_o$ of the amplifier $AMP_1$ decreases in the minus direction with a rise in the rotational speed $V_a$ (Figure 12(a)). The output voltage $V_o$ of the amplifier $AMP_1$ is inverted by the amplifier $AMP_2$ and converted into an amplitude signal $I_m$ shown in Figure 12(b), this signal being provided as an output. The variable resistor VR serves to generate an amplitude $I_{mo}$ at the lower speeds.

According to the induction motor driving system of Figure 10 as described above, at the high speeds, the command exciting current value is increased in accordance with the rotational speed, so that the current as commanded can be caused to flow. With this method, however, when a driving supply voltage has changed, for example, has risen, the exciting current flows excessively, so that the induction motor generates heat.

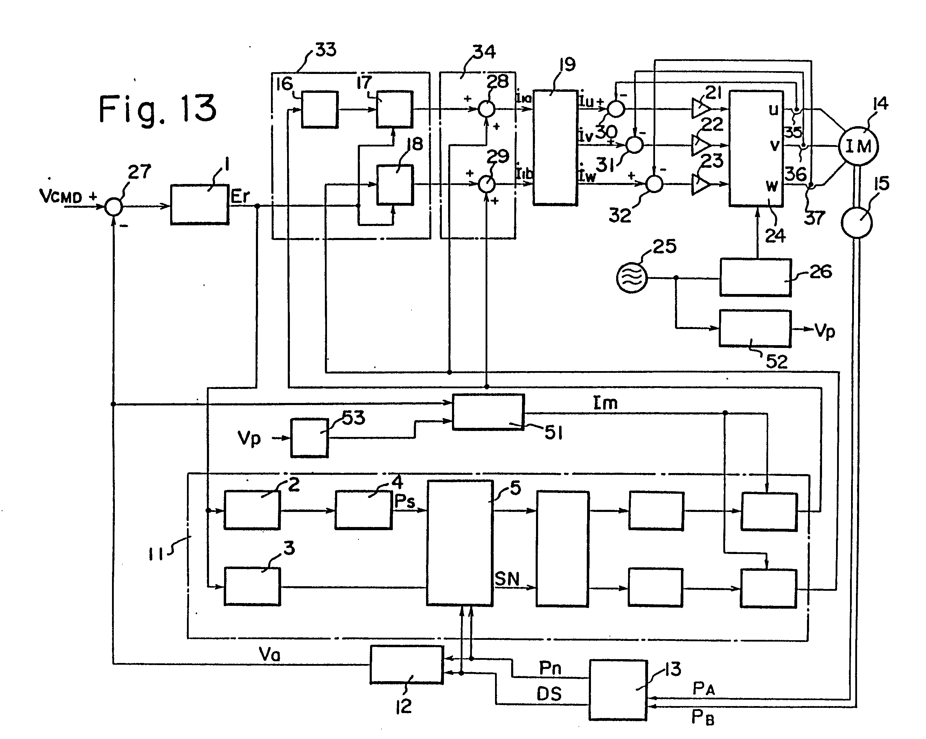

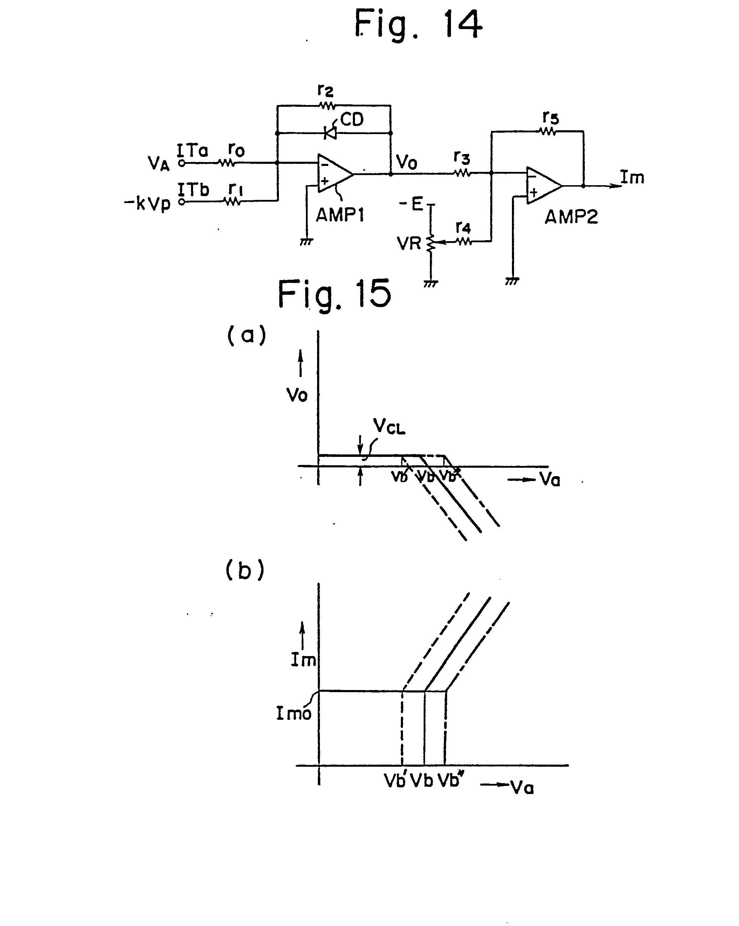

Figures 13, 14 and 15 are explanatory diagrams of another embodiment of the present invention according to which even when the driving supply voltage has risen, the induction motor does not generate heat, and even when the rotational speed has risen, the current as commanded can be caused to flow. Figure 13 is a block diagram, Figure 14 is a circuit diagram of an exciting current amplitude-controlling circuit, and Figure 15 shows waveforms of parts in the circuit.

When the base speed $V_b$ in Figure 9 is fixed even in case of the rise of the driving supply voltage, the motor fails into an overexcited state and generates heat conjointly with the fact that the exciting current command has been increased above the base speed $V_b$.

In the present invention, therefore, when the supply voltage has risen, the base speed is changed into $V_b''$ ($>V_b$) as indicated by a dot-and-dash line, and when the supply voltage has lowered, the base speed is changed into $V_b'$ ($<V_b$) as indicated by a dotted line. That is, the rotational speed at which the vector control is shifted to the slip control is changed depending upon the magnitude of the supply voltage. In consequence, when the supply voltage is great, the present embodiment carries out the vector control of holding the exciting current constant at rotational speeds of and below $V_b''$ and the slip control at above $V_b''$. When the vector control is performed at $V_b-V_b''$, usually current does not flow through the motor as commanded, but in case of a great supply voltage, the current can be caused to flow through the motor as commanded and in quick response. When the slip control is performed at above $V_b''$, it may be feared that the exciting current will flow excessively conjointly with the increase of the supply voltage, resulting in the generation of heat by the motor. Actually, however, when the rotational speed is high, the susceptance $b_o$ ($=\omega L$) indicated in Figure 4 increases, so that the exciting current does not flow excessively and that the current as commanded flows.

The point of difference of Figure 13 from Figure 5 is the disposition of an exciting current amplitude-controlling circuit 51, a supply voltage output circuit 52 for providing a supply voltage $V_p$, and a level changer 53 for changing the supply voltage $V_p$ to $k \cdot V_p$ ($k$ being a constant value). Although not illustrated in detail, the supply voltage output circuit 52 is constructed of a transformer and a diode and performs half-wave rectification to deliver the supply voltage $V_p$, and the level changer 53 changes the supply voltage $V_p$ to the level $k \cdot V_p$ matching with an actual speed voltage $V_A$. As illustrated in Figure 14, the exciting current amplitude-controlling circuit 51 has the same arrangement as that of the exciting current amplitude-controlling circuit 41 in Figure 11, and it has its input terminal $IT_a$ supplied with the voltage $V_A$ corresponding to the actual speed $V_a$ and has its input terminal $IT_b$ supplied with—$k \cdot V_p$ varying in dependence on the supply voltage. Accordingly, when the supply voltage $V_p$ is great, the amplitude signal $I_m$ increases in accordance with the rotational speed $V_a$ at rotational speeds

of above $V_b''$ as shown in Figure 15(b), and when the supply voltage $V_p$ is small, the amplitude signal $I_m$ begins to increase in accordance with the rotational speed $V_a$ at the rotational speed $V_b'$. As a result, the exciting current components, namely the outputs of the DA converters 9 and 10, have their increasing point (base speed) changed from $V_b'$ to $V_b''$ in accordance with the magnitude of the supply voltage.

As set forth above, even when the rotational speed has become high in the vector control current as commanded can be caused to flow through an induction motor, and an induction motor control of quick response can be realized. Accordingly, the induction motor is applicable also to precise control having heretofore been impossible without resorting to D.C. motors, and this can contribute to curtailing the cost of equipment. In addition, even when a supply voltage has changed, the motor is not overexcited and can be prevented from generating excess heat. Therefore, even when a driving device is exported to a foreign country where a driving supply voltage is unequal to that in the domestic country (eg Japan), it can be operated with domestic specifications left unchanged. This permits rational unification of the design or fabrication of the driving devices, and also permits a reduction in the price of the driving devices.

## Claims

1. An induction motor driving system comprising a speed detector (15) for detecting the rotational speed of an induction motor (14), speed command means for producing a command speed ($V_{CMD}$), an error amplifier (1) for amplifying the difference between the actual rotational speed of the induction motor (14) and the command speed ($V_{CMD}$), and a controllable inverter (24) for supplying induction currents to the motor (14), the motor driving system being adapted and arranged such that said inverter (24) will be controlled in dependence upon said difference between the actual and command motor speeds by so-called "vector control" in which motor primary current is varied and motor exciting current is held constant in dependence upon a constant value (lo) of exciting current command (lm), the driving system being characterised by means (41) for detecting when the actual motor speed ($V_a$) exceeds a predetermined base speed ($V_b$), and for increasing the exciting current command value (lm) in accordance with the actual motor speed ($V_a$) when it exceeds said predetermined base speed ($V_b$).

2. An induction motor driving system according to claim 1, wherein said detecting and increasing means (41) is arranged to multiply vector control values $\sin\varphi$, $\cos\varphi$ by the exciting current command value (lm), where $\varphi$ is the rotational angle of the motor main magnetic flux.

3. An induction motor driving system according to claim 1 or 2, wherein said detecting and increasing means comprises a clamped amplifier (AMP1) which outputs a fixed signal when $V_a$ is less than $V_b$, and a signal which varies in accordance with $V_a$ when $V_a$ exceeds $V_b$.

4. An induction motor driving system according to claim 3, wherein said clamped amplifier (AMP1) is followed by an inverting amplifier (AMP2) the output of which rises with $V_a$ when $V_a$ exceeds $V_b$.

5. A driving system according to any preceding claim, wherein said detecting and increasing means (51) is coupled to a driving supply voltage detector (52) and is arranged to change said predetermined base speed ($V_b$) in accordance with the level of the driving supply voltage.

6. A driving system according to claim 5, wherein a level changer (53) is coupled between the driving supply voltage detector (52) and the detecting and increasing means (51), for inputting to the latter a base speed ($V_b$) which varies in accordance with the level of the driving supply voltage.

7. A driving system according to claim 5 or 6, when claim 5 is appended to claim 3 or 4, wherein the driving supply voltage detector (52) is coupled to an input of the clamped amplifier (AMP1).

**Patentansprüche**

1. Antriebssystem eines Induktionsmotors mit einem Drehzahldetektor (15) zum Erfassen der Drehzahl des Induktionsmotors (14), Drehzahlbefehlserzeugungsmitteln zum Erzeugen eines Befehlsdrehzahlsignals ($V_{CMD}$), einem Fehlersignalverstärker (1) zum Verstärken eines Signals betreffend die Differenz zwischen der tatsächlichen Drehzahl des Induktionsmotors (14) und der Befehlsdrehzahl ($V_{CMD}$) und einem steuerbaren Wechselrichter (24) zum Ausgeben von Erregerströmen an den Induktionsmotor (14), wobei das Antriebssystem des Induktionsmotors dazu bestimmt und derart beschaffen ist, daß der Wechselrichter (24) in Abhängigkeit von der Differenz zwischen den tatsächlichen und den befohlenen Motordrehzahlen durch eine sog. "Vektorsteuerung" gesteuert wird, bei welcher der Motor-Primärstrom variiert wird und der Motorerregerstrom in Abhängigkeit von einem konstanten Wert (lo) eines Erregerstrombefehlssignals (lm) konstant gehalten wird, gekennzeichnet durch ein Mittel (41) zum Erfassen der Tatsache, daß die tatsächliche Motordrehzahl ($V_a$) eine vorbestimmte Grunddrehzahl ($V_b$) übersteigt und zum Erhöhen des Wertes des Erregerstrombefehlssignals (lm) in Übereinstimmung mit der tatsächlichen Motordrehzahl ($V_a$), wenn sie die vorbestimmte Grunddrehzahl ($V_b$) übersteigt.

2. Antriebssystem eines Induktionsmotors nach Anspruch 1, bei dem das Mittel (41) zum Erfassen und Erhöhen derart beschaffen ist, daß es Vektorsteuerwerte $\sin\varphi$, $\cos\varphi$ mit dem Wert des Erregerstrombefehlssignals (lm) multipliziert, wobei $\varphi$ der Verdrehungswinkel des Motorhauptmagnetflusses ist.

3. Antriebssystem eines Induktionsmotors nach Anspruch 1 oder 2, bei dem das Mittel zum Erfassen und Erhöhen einen mit einer Klemmdiode überbrückten Verstärker (AMP1) enthält, der ein festes Signal ausgibt, wenn $V_a$ geringer als $V_b$ ist, und ein Signal ausgibt, das sich in Übereinstimmung mit $V_a$ ändert, wenn $V_a$ $V_b$ übersteigt.

4. Antriebssystem eines Induktionsmotors nach Anspruch 3, bei dem dem mit der Klemmdiode überbrückten Verstärker (AMP1) ein invertierender Verstärker (AMP2) nachgeordnet ist, dessen Ausgangssignal mit $V_a$ ansteigt, wenn $V_a$ $V_b$ übersteigt.

5. Antriebssystem nach einem der vorhergehenden Ansprüche, bei dem das Mittel (51) zum Erfassen und Erhöhen mit einem Antriebsversorgungsspannungsdetektor (52) verbunden und derart beschaffen ist, daß es die vorbestimmte Grunddrehzahl ($V_b$) in Übereinstimmung mit dem Pegel der Antriebsversorgungsspannung ändert.

6. Antriebssystem nach Anspruch 5, bei dem eine Pegeländerungseinrichtung (53) zwischen den Antriebsversorgungsspannungsdetektor (52) und das Mittel (51) zum Erfassen und Erhöhen zum Eingeben eines Signals für eine Grunddrehzahl ($V_b$), die sich in Übereinstimmung mit dem Pegel der Antriebsversorgungsspannung ändert, in dieses Mittel (51) geschaltet ist.

7. Antriebssystem nach Anspruch 5 oder 6, wenn Anspruch 5 auf Anspruch 3 oder 4 bezogen wird, bei dem der Antriebsversorgungsspannungsdetektor (52) mit einem Eingang des mit der Klemmdiode überbrückten Verstärkers (AMP1) verbunden ist.

**Revendications**

1. Système d'entraînement à moteur à induction comprenant un détecteur de vitesse (15) pour détecter la vitesse de rotation d'un moteur à induction (14), des moyens de commande de vitesse pour produire une vitesse de commande ($V_{CMD}$), un amplificateur d'erreur (1) pour amplifier la différence entre la vitesse de rotation réelle du moteur à induction (14) et la vitesse de commande ($V_{CMD}$), et un onduleur contrôlable (24) qui applique des courants d'induction au moteur (14), le système d'entraînement du moteur étant adapté et arrangé de façon que ledit onduleur (24) soit commandé en fonction de ladite différence entre les vitesses réelle et de commande du moteur par ce que l'on appelle une "commande vectorielle" dans laquelle on fait varier le courant primaire du moteur et on maintient constant le courant d'excitation du moteur en fonction d'une valeur constante ($I_o$) de la commande du courant d'excitation ($I_m$), le système d'entraînement étant caractérisé en ce qu'il comprend des moyens (41) pour détecter à quel moment la vitesse réelle ($V_a$) du moteur dépasse une vitesse de base prédéterminée ($V_b$) et pour augmenter la valeur de la commande du courant d'excitation ($I_m$) en fonction de la vitesse réelle ($V_a$) du moteur quand cette dernière dépasse une vitesse de base prédéterminée ($V_b$).

2. Système d'entraînement de moteur à induction selon la revendication 1, dans lequel lesdits moyens de détection et d'augmentation (41) sont prévus pour multiplier les valeurs de la commande vectorielle $\sin\varphi$, $\cos\varphi$ par la valeur de commande du courant d'excitation ($I_m$), où $\varphi$ est l'angle de rotation du flux magnétique principal du moteur.

3. Système d'entraînement de moteur à induction selon l'une des revendications 1 ou 2, dans lequel lesdits moyens de détection et d'augmentation sont constitués d'un amplificateur clampé (AMP1) aui délivre un signal fixe quand $V_a$ est inférieure à $V_b$, et un signal qui varie en fonction de $V_a$ quand $V_a$ dépasse $V_b$.

4. Système d'entraînement du moteur à induction selon la revendication 3, dans lequel ledit amplificateur clampé (AMP1) est suivi d'un amplificateur inverseur (AMP2) dont la sortie augmente avec $V_a$ quand $V_a$ dépasse $V_b$.

5. Système d'entraînement selon l'une quelconque des revendications précédentes, dans lequel lesdits moyens de détection et d'augmentation (51) sont associés à un détecteur de tension de l'alimentation d'entraînement (52) et prévus pour changer ladite vitesse de base prédéterminée ($V_b$) en fonction du niveau de la tension d'alimentation de l'entraînement.

6. Système d'entraînement selon la revendication 5, dans lequel un changeur de niveau (53) est couplé entre le détecteur de la tension d'alimentation de l'entraînement (52) et les moyens de détection de d'augmentation (51), afin d'introduire dans ces derniers une vitesse de base ($V_b$) qui varie en fonction du niveau de la tension d'alimentation de l'entraînement.

7. Système d'entraînement, selon l'une des revendications 5 ou 6, quand la revendication 5 est ajoutée à la revendication 3 ou 4, dans lequel le détecteur de la tension d'alimentation de l'entraînement (52) est couplé à une entrée de l'amplificateur clampé (AMP1).

# Fig. 1

(A)

(B)

# Fig. 4

# Fig. 2

# Fig. 3

(A)

(B)

1

Fig. 5

# Fig. 6

# Fig. 9

# Fig. 7

# Fig. 8

Fig. 10

# Fig. 11

# Fig. 12 (a)

# (b)

Fig. 13

# Fig. 14

# Fig. 15

(a)

(b)

8